# EUROPÄISCHE PATENTSCHRIFT

(11) **EP 1 094 244 B1**
(45) Veröffentlichungstag und Bekanntmachung des Hinweises auf die Patenterteilung: **30.07.2003**
(21) Anmeldenummer: 00122108.4
(22) Anmeldetag: 12.10.2000
(51) Int. Cl.: F16H 7/04, F16H 55/50

(54) **Seilumlenkung und dafür geeignetes Kunstfaserseil sowie deren Verwendung**
Cable guide roller, synthetic fibre rope suitable therefor and their use
Poulie de déviation pour corde, câble en fibres synthétiques y relatif et leur utilisation

(30) Priorität: 21.10.1999 EP 99810960
(43) Veröffentlichungstag der Anmeldung: 25.04.2001
(73) Patentinhaber: INVENTIO AG, CH-6052 Hergiswil (CH)
(72) Erfinder: De Angelis, Claudio, Dipl.-Ing., 6004 Luzern (CH)

(56) Entgegenhaltungen:
- EP-A- 0 282 709
- EP-A- 0 565 956
- EP-A- 0 672 781
- DE-U- 8 909 450
- FR-A- 2 312 449
- US-A- 3 415 052

## Beschreibung

Die Erfindung betrifft eine Seilumlenkung und ein dafür geeignetes Kunstfaserseil, mit den im Oberbegriff der Patentansprüche 1 bzw. 6 angegebenen Merkmale sowie deren Verwendung.

Seile sind insbesondere in der Fördertechnik, wie z. B. bei Aufzügen, im Kranbau und im Bergbau oder dergleichen, ein wichtiges stark beanspruchtes Maschinenelement. So wird ein Seil beim Lauf unter Last über ein Umlenkelelment, wie z.B. einer Seilrolle, einer Seilscheibe oder einer Seiltrommel, etc., über das Umlenkelement gebogen, was zu besonderen Bewegungen der Litzen des Seils führt.

Ein entsprechend verwendetes Seil ist beispielsweise aus der EP 0 672 781 A1 der Anmelderin bekannt. Das mehrlagige parallelgedrehten Aramidfaserlitzenseils bietet hinsichtlich Lebensdauer, hoher Abrieb- und Biegewechselfestigkeit sehr zufriedenstellende Werte; allerdings ist festgestellt worden, dass beim Umlenken des permanent belasteten Kunstfaserseils auf einer Treibscheibe, einer Seiltrommel oder einer Seilrolle oder dergleichen, sich innerhalb kurzer Betriebszeit im Zugbereich der Litzendecklage korkenzieherartige Seilverformungen einstellen können, welche zu einer Seilbruchkraftminderung oder gar zum Ausfall des Seiles führen könnten.

Die Erfindung verfolgt daher das Ziel, eine dauerhaft zuverlässige Seilumlenkung mit einem rollen- bzw. treibscheibengängigen Kunstfaserseil anzugeben.

Dieses Ziel wird erfindungsgemäss durch eine Seilumlenkung mit den im Patentanspruch 1 angegebenen Merkmalen erreicht, welcher sich insbesondere dadurch auszeichnet, dass das Kunstfaserseil mindestens über eine Länge von drei Schlaglängen der Verseilung auf dem Umlenkelement aufliegt. Die abhängigen Ansprüche enthalten zweckmässige und vorteilhafte Weiterbildungen und/ oder Ausführungen der durch den Patentanspruch 1 gegebenen Erfindung.

Das Wesen der Erfindung besteht also darin, dass der Durchmesser des Umlenkelements und die Schlaglänge des Kunstfaserseils derart aufeinander abgestimmt sind, dass die Litzen der Litzendecklage bei der Umschlingung jeweils mindestens dreimal auf dem Umlenkelement aufliegen.

Umfangreiche Versuche der Anmelderin haben ergeben, je kleiner der Umschlingungsbogen ist und je grösser die Schlaglänge der Litzendecklage ist, desto mehr Litze wird beim Biegen über eine Seilrolle, eine Seilscheibe, einer Seiltrommel oder dergleichen nachgezogen. Je kürzer die Schlaglänge und je grösser das Umlenkelement sind , desto geringer sind die Relativbewegungen der Litzen untereinander.

Daraus wurde die Erkenntnis gewonnen, je kürzer die Seilschlaglänge der Decklage ist, desto kleiner kann der TreibscheibenDdurchmesser der Seilrolle, Treibscheibe oder dergleichen, gewählt werden. Dabei hat sich erfindungsgemäss als Minimalanforderung herausgestellt, dass die Litze bei der Umschlingung mindestens dreimal auf der Treibscheibe aufliegen sollte, damit eine irreversible Litzenverschiebung zuverlässig vermieden werden kann.

Darüberhinaus wurde in Weiterbildung der Erfindung, bei einem Seilantrieb erkannt, dass je seltener die nachziehende Litze im Rillengrund der angetriebenen Seilscheibe aufliegt, desto leichter kann es zu Überlängen im Zugbereich kommen.

Die Funktion solcher Seilantriebe beruht bekannter Massen, darauf, dass die Antriebskraft über den jeweils mit der Treibscheibe in Kontakt stehenden Abschnitt dem Seil aufgepräg wird. Das Seil wird beim Lauf über die Treibscheibe gebogen, wobei speziell im Zugbereich der Litzendecklage die fehlende Länge entsprechend nachgezogen wird. Gleichzeitig werden überwiegend die Litzen im Druckbereich des Seils von der Treibscheibe geschoben. Zur Erfüllung dieser vielfältigen Seilbeanspruchungen ist die innere Seilsystemausbalancierung von besonderer Wichtigkeit.

Deshalb wird gemäss einer bevorzugten Ausführungsform der Erfindung bei einem Seilantrieb mit Kunstfaserseil mit Zwischenmantel die Bildung von Überlängen im Zugbereich verhindert, wenn der Treibscheibendurchmesser und die Seilschlaglänge so aufeinander abgestimmt, dass die Litzen der Decklitzenlage mindestens viermal auf der Treibscheibe aufliegen. Überlängen im Zugbereich sind bei dieser Seilform mit Zwischenmantel weniger reversibel, je höher der Reibwert des Zwischenmantels zur Litzendecklage ist, weil die Litzen unter Seillast durch den Schnürdruck fixiert sind.

Im folgenden ist ein bevorzugtes Ausführungsbeispiel der Erfindung anhand der Zeichnung ausführlich beschrieben. Es zeigt:
- Figur 1,: eine schematische Ansicht einer Seilumlenkung bei einer Aufzugsanlage mit einer über erfindungsgemässe Kunstfaserlitzenseile mit einem Gegengewicht verbundenen Kabine;
- Figur 2,: eine schematische Darstellung eines gedrehten Litzenseils;
- Figur 3,: eine Ansicht einer Seilscheibe in Richtung der Drehachse und einem darüberlaufenden erfindungsgemäss verseilten Treibseil.

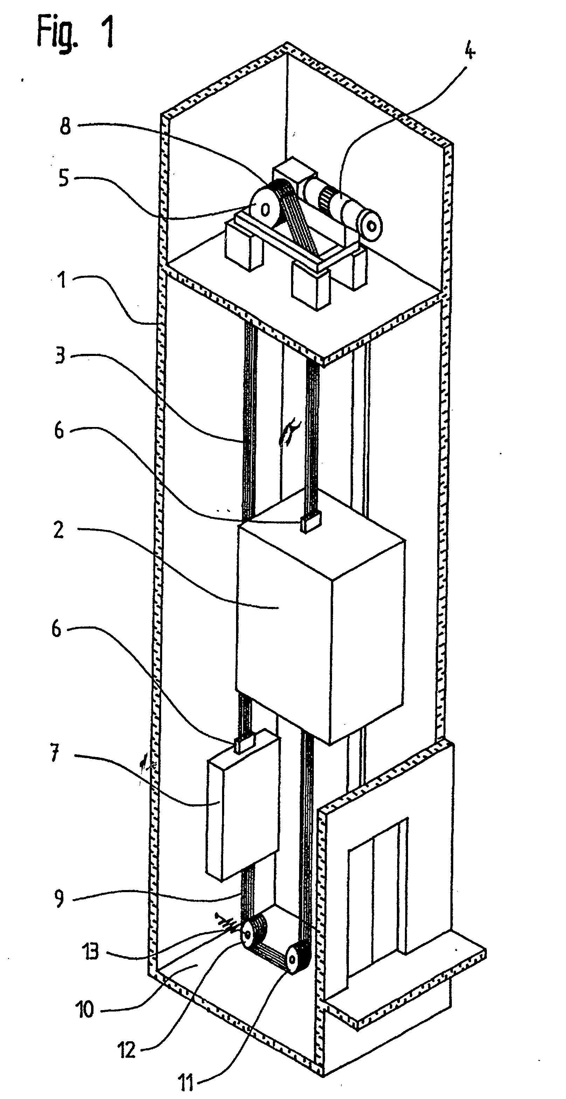

Gemäss Figur 1 hängt eine in einem Schacht 1 geführte Kabine 2 an mehreren, hier sechs, Treibseilen 3 aus tragenden Aramidfasern, die über eine mit einem Antriebsmotor 4 verbundene Treibscheibe 5 laufen. Auf der Kabine 2 befinden sich Seilendverbindungen 6, an denen jeweils ein Ende der Seile 3 befestigt ist. Die jeweils anderen Enden der Seile 3 sind in gleicher Weise an einem Gegengewicht 7 festgemacht, welches ebenfalls in dem Schacht 1 geführt ist. Ausgleichsseile 9 sind in ähnlicher Weise mit ihrem ersten Ende am unteren Ende der Kabine 2 angebunden. Die Ausgleichsseile 9 sind über eine am Schachtboden 10 fluchtend unterhalb der Befestigungsstelle am Kabinenboden platzierte Umlenkrolle 11 und eine daneben, ebenfalls am Schachtboden 10 zum Gegengewicht 7 hin ausgerichtet montierte Umlenkrolle 12 zum unteren Teil des Gegengewichts 7 geführt und dort angelenkt. Die Ausgleichsseile 9 sind über ihre Länge zwischen der Kabine 2 und dem Gegengewicht 7 mit Hilfe von Gewichten oder wie hier gezeigt mittes der Rolle 12 gespannt. Hier dient eine Zugfeder 13, welche an der Schachtwand verankert ist und die Umlenkrolle 12 in Richtung Schachtwand zieht und dabei die Ausgleichsseile 9 spannt. An Stelle der Zugfeder kann die Umlenkrolle auch mit einer geeigneten Kinematik zum Spannnen der Ausgleichsseile versehen sein.

Die Treibscheibe 5 weist sechs dicht nebeneinander liegende Rillen 8 für jeweils ein weiter unten beschriebenes, erfindungsgemäss gedrehtes Treibseil 3 auf. Im Aufzugsbau üblich sind bisher Treibscheiben mit zwei bis zwölf Rillen. Bei der hier beschriebenen Ausführung sind Rillen 8 mit Halbrund-Profil ausgebildet. Möglich sind aber auch andere Rillenformen, die der Fachmann kennt und entsprechend den jeweils verwendeten Seilquerschnittsformen vorsehen kann, ohne dass sich dadurch das Wesen der Erfindung ändert.

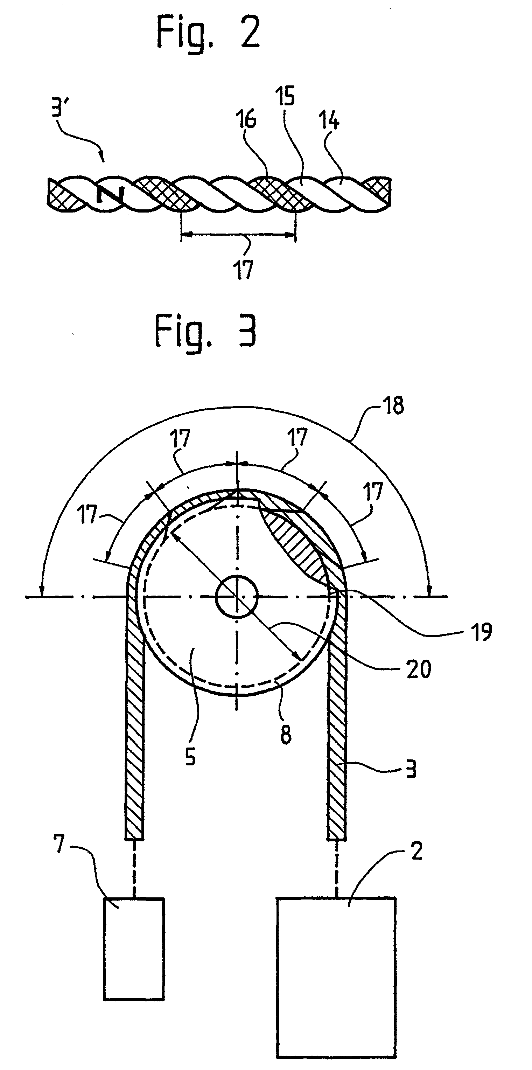

Figur 2 zeigt zur Begriffsbestimmung beispielsweise ein in an sich bekannter Weise aus drei Aramidfaserlitzen 14 in Z-Drehung verseiltes Kunstfaserseils 3'. Die Aramidlitzen 14,15,16 liegen schraubenlinienförmig eng aneinander, wobei die Steigungsrichtung im wesentlichen dem Mittelteil des Buchstabens "Z" folgt. Die Steigungshöhe der Verseilung, ist darin am Beispiel der schwarz gekennzeichneten Aramidlitze 16 aufgezeigt und als Schlaglänge 17 beizeichnet. Über das hier dargestellte Beispiel hinaus können die Bezeichnungen auf die in der Erfindung gegenständlichen mehrlagigen Kunstfaserseile 3 übertragen werden, bei denen die mit der erfindungsgemässen Lehre erzielbaren Vorteile mit zunehmender Litzenlagenanzahl grösser werden. Die Drehrichtung der einzelnen Litzenlagen ist dabei von untergeordneter Bedeutung; vielmehr ist die Aufeinanderfolge von Litzenlagen mit unterschiedlicher Drehrichtung, insbesondere angrenzend zur Litzendecklage erfindungswesentlich.

Bei Verwendung von Kunstfaserseilen mit Zwischenmantel zwischen einzelnen Litzenlagen sind nachgezogene Überlängen im Zugbereich des gebogenen Seils, mit zunehmendem Reibwert des Zwischenmantels zur Litzendecklage weniger reversibel , weil die gezogene Litze unter Seillast durch den Schnürdruck fixiert ist. Hierfür gilt erfindungsgemäss, je höher der Reibwert vom Zwischenmantel zur Litzendecklage ist, desto öffter soll eine Litze der Decklage bei einer Umschlingung auf der Treibscheibe aufliegen.

Figur 3 zeigt die Seilscheibe 5 und, hier stellvertretend für gewöhnlich mehrere Seile 3, ein über die Seilscheibe 5 geführtes Treibseil 3. Das Seil 3 ist mit einem Ende mit der Kabine 2 und mit seinem zweiten Ende mit dem Gegengewicht 7 verbunden, durch deren Massenkräfte das Seil 3 beim Lauf über die Seilscheibe 5 permanent belastet ist. Die Last von Kabine 2 und Gegengewicht 7 stellt einen ausreichenden Reibschluss zwischen Treibscheibe 5 und dem jeweils über den Umschlingungswinkel 18 auf der Treibscheibe 5 aufliegenden Seilabschnitt sicher. Bei dieser Ausführung eines erfindungsgemässen Seilantriebs beträgt der Durchmesser 20 der Treibscheibe 5 ein Mass von 260 mm. Folglich darf die Schlaglänge 17 der Decklitzenlage nicht länger als 60-80 mm sein. Damit ist im Sinne der Erfindung ein minimaler Umschlingungswinkel von 120° zulässig. Ausgeführt ist in Figur 3 ein Umschlingungswinkel von 180°. Üblich ist allerdings auch ein Umschlingungswinkel von 140°, wie er beispielsweise in der Ausführung gemäss Figur 1 vorgesehen ist. Bei derartigen Ausführungen ist es jedoch ohnehin sichergestellt, dass das Seil beim Lauf über die Treibscheibe jeweils über einen Umschlingungsbogen auf der Teibscheibe 5 aufliegt, dessen Länge mehr als drei Schlaglängen 17 des gedrehten Treibseils 3 entspricht.

Neben Anwendungen als reines Tragseil, lässt sich das Seil bei verschiedensten Anlagen der Fördertechnik anwenden, z.B. für Aufzüge, Schachtförderanlagen im Bergbau, Lastkränen wie Bau-, Hallen- oder Schiffskräne, Seilbahnen und Skilifte sowie als Zugmittel bei Fahrtreppen. Der Antrieb kann sowohl durch Reibschluss über Treibscheiben oder Koeppe-Scheiben als auch durch drehende Seiltrommeln, auf die das Seil aufgewickelt wird, erfolgen. Unter Förderseil ist ein laufendes, angetriebenes Seil zu verstehen, das gelegentlich auch als Zugoder Tragseil bezeichnet wird.

### Bezugszeichenliste

- 1-: Schacht
- 2-: Kabine
- 3,3'-: Treibseil
- 4-: Antriebsmotor
- 5-: Treibscheibe
- 6-: Seilendverbindung
- 7-: Gegengewicht
- 8-: Seilrillen
- 9-: Ausgleichsseil
- 10-: Schachtboden
- 11-: Umlenkrolle
- 12-: Umlenkrolle
- 13-: Zugfeder
- 14-: Aramidfaserlitzen
- 15-: Aramidfaserlitzen
- 16-: Aramidfaserlitzen
- 17-: Schlaglänge
- 18-: Umschlingungswinkel
- 19-: Auflaufpunkt
- 20-: Treibscheibendurchmesser

## Patentansprüche

1. Seilumlenkung, bei der ein geschlagenes Kunstfaserseil (3) aus mindestens zu einer äusseren Litzenlage verseilten tragenden Kunstfaserlitzen (14,15,16) kreisbogenförmig über ein Umlenkelement (5) geführt ist, **dadurch gekennzeichnet, dass** das Kunstfaserseil (3) mindestens über eine Länge (18) von drei Schlaglängen (17) der Verseilung auf dem Umlenkelement (5) aufliegt.

2. Seilumlenkung nach Anspruch 1, **dadurch gekennzeichnet, dass** das Umlenkelement (5) mindestens eine Profilrille (8) aufweist, in der jeweils ein Kunstfaserlitzenseil (3) aufliegt, wobei die Litzen der Decklage mindestens dreimal im Rillengrund (21) aufliegen.

3. Seilumlenkung nach Anspruch 1 oder 2, **dadurch gekennzeichnet, dass** das Kunstfaserlitzenseil (3) entlang eines durch einen Umschlingungswinkelbereich (18) von 120° bis einschliesslich 180°definierten Kreisbogen auf dem Umlenkelement (5) aufliegt.

4. Seilumlenkung nach einem der Ansprüche 1 bis 3, **dadurch gekennzeichnet, dass** der Durchmesser (20) des Umlenkelements (5) grösser D=250 mm gewählt ist.

5. Seilumlenkung nach einem der Ansprüche 1 bis 4, **dadurch gekennzeichnet, dass** das Kunstfaserlitzenseil (3) eine äussere Litzendecklage mit einer Schlaglänge (17) von 60-80 mm aufweist.

6. Kombination aus einem Kunstfaserseil (3) und Umlenkelementen (5), über welche das Seil (3) kreisbogenförmig führbar ist, bestehend aus mindestens zu einer äusseren Litzenlage verseilten tragenden Kunstfaserlitzen (14,15,16), **dadurch gekennzeichnet, dass** der Durchmesser (20) des Umlenkelements (5) und die Schlaglänge (17) des Kunstfaserseils (3) derart aufeinander abgestimmt sind, dass die Litzen (14,15,16) der Litzendecklage bei der Umschlingung (18) jeweils mindestens dreimal auf dem Umlenkelement (5) aufliegen.

7. Kombination nach Anspruch 6, **dadurch gekennzeichnet, dass** die äussere Litzendecklage eine Schlaglänge (17) von 60-80 mm aufweist.

8. Kombination nach Anspruch 6 oder 7, bestehend aus mindestens zu zwei konzentrischen Litzenlagen miteinander verseilten tragenden Kunstfaserlitzen und einem zwischen der inneren Litzenlage und der äusseren Litzenlage ausgebildeten Zwischenmantel.

9. Kombination nach einem der Ansprüche 1-9 **dadurch gekennzeichnet, dass** die tragenden Kunstfaserlitzen (14,15,16) aus aromatischen Polyamiden bestehen.

10. Seilantrieb mit einer Seilumlenkung nach einem der Ansprüche 1-5.

## Claims

1. Rope deflection, in which a laid synthetic fiber rope (3) comprising at least load-bearing synthetic fiber strands (14, 15, 16) laid to an outer layer of strands is passed in the form of an arc of a circle over a deflection element (5),
**characterized in that**
the synthetic fiber rope (3) lies on the deflection element (5) along a length (18) of at least three lay lengths (17).

2. Rope deflection according to Claim 1,
**characterized in that**
the deflection element (5) has at least one shaped groove (8) in each of which a synthetic fiber stranded rope (3) lies, the strands of the covering layer lying on the bed of the groove (21) at least three times.

3. Rope deflection according to Claim 1 or 2,
**characterized in that**
the stranded synthetic fiber rope (3) lies on the deflection element (5) along an arc of a circle defined by an angle of wrap (18) in a range from 120° up to and including 180°.

4. Rope deflection according to one of Claims 1 to 3,
**characterized in that**
the diameter (20) of the deflection element (5) is selected to be greater than D = 250 mm.

5. Rope deflection according to one of Claims 1 to 4,
**characterized in that**
the synthetic fiber stranded rope (3) has an outer covering layer of strands with a lay length (17) of 60-80 mm.

6. Combination of a synthetic fiber rope (3) and deflection elements (5) over which the rope (3) can be passed in the form of an arc of a circle, comprising at least load-bearing synthetic fiber strands (14, 15, 16) laid to an outer layer of strands,
**characterized in that**
the diameter (20) of the deflection element (5) and the lay length (17) of the synthetic fiber rope (3) are adapted to each other in such a way that within the angle of wrap (18) the strands (14, 15, 16) of the covering layer of strands each lie on the deflection element (5) at least three times.

7. Combination according to Claim 6,
**characterized in that**
the outer covering layer of strands has a lay length (17) of 60-80 mm.

8. Combination according to Claim 6 or 7,
comprising at least load-bearing synthetic fiber strands laid together into two concentric layers of strands and an intersheath formed between the inner layer of strands and the outer layer of strands.

9. Combination according to one of Claims 1-9,
**characterized in that**
the load-bearing synthetic fiber strands (14, 15, 16) are composed of aromatic polyamides.

10. Rope drive with a rope deflection according to one of Claims 1-5.

## Revendications

1. Déviation de câble avec laquelle un câble toronné en fibres synthétiques (3) formé de torons porteurs en fibres synthétiques (14, 15, 16) au moins toronnés pour former une couche de torons extérieure passe en arc de cercle sur un élément de déviation (5), **caractérisée en ce que** le câble en fibres synthétiques (3) est posé sur l'élément de déviation (5) au moins sur une longueur (18) égale à trois longueurs de pas (17) du toronnage.

2. Déviation de câble selon la revendication 1, **caractérisée en ce que** l'élément de déviation (5) présente au moins une gorge profilée (8) dans laquelle est posé un câble en torons de fibres synthétiques (3), les torons de la couche supérieure étant posés au moins trois fois dans le fond (21) de la gorge.

3. Déviation de câble selon la revendication 1 ou 2, **caractérisée en ce que** le câble en torons de fibres synthétiques (3) est posé sur l'élément de déviation (5) le long d'un arc de cercle qui est défini par une zone d'angle d'enroulement (18) de 120° à 180° inclus.

4. Déviation de câble selon l'une des revendications 1 à 3, **caractérisée en ce qu'**on choisit pour l'élément de déviation (5) un diamètre (20) supérieur à D=250 mm.

5. Déviation de câble selon l'une des revendications 1 à 4, **caractérisée en ce que** le câble en torons de fibres synthétiques (3) comporte une couche de torons extérieure avec une longueur de pas (17) de 60-80 mm.

6. Combinaison d'un câble en fibres synthétiques (3) et d'éléments de déviation (5) grâce à laquelle le câble (3) peut être guidé en arc de cercle, composée de torons porteurs en fibres synthétiques (14, 15, 16) au moins toronnés pour former une couche de torons extérieure, **caractérisée en ce que** le diamètre (20) de l'élément de déviation (5) et la longueur de pas (17) du câble en fibres synthétiques (3) sont accordés pour que les torons (14, 15, 16) de la couche de torons extérieure soient posés au moins trois fois sur l'élément de déviation (5) lors de l'enroulement (18).

7. Combinaison selon la revendication 6, **caractérisée en ce que** la couche de torons extérieure a une longueur de pas (17) de 60-80 mm.

8. Combinaison selon la revendication 6 ou 7, composée de torons porteurs en fibres synthétiques au moins toronnés pour former deux couches de torons concentriques, et d'une gaine intermédiaire formée entre la couche de torons intérieure et la couche de torons extérieure.

9. Combinaison selon l'une des revendications 1 à 9, **caractérisée en ce que** les torons porteurs en fibres synthétiques (14, 15, 16) se composent de polyamides aromatiques.

10. Entraînement à câble avec une déviation de câble selon l'une des revendications 1 à 5.
